# FASCICULE DE BREVET EUROPEEN

(11) **EP 0 766 595 B1**
(45) Date de publication et mention de la délivrance du brevet: **26.08.1998**
(21) Numéro de dépôt: 95924349.4
(22) Date de dépôt: 21.06.1995
(51) Int. Cl.: B01J 2/00, B01J 2/02, B22F 9/08

(54) **PROCEDE D'ATOMISATION D'UN MATERIAU LIQUIDE DISPERSABLE**
VERFAHREN ZUR ZERSTÄUBUNG EINER DISPERGIERBAREN FLÜSSIGKEIT
PROCESS FOR SPRAYING A DISPERSIBLE LIQUID MATERIAL

(30) Priorité: 21.06.1994 FR 9407562
(43) Date de publication de la demande: 09.04.1997
(73) Titulaire: WHEELABRATOR ALLEVARD, 38570 Le Cheylas (FR)
(72) Inventeur: HUET, Daniel, F-38330 Saint-Ismier (FR)
(74) Mandataire: Derambure, Christian
(86) Numéro de dépôt international: FR9500824
(87) Numéro de publication internationale: WO9535158

(56) Documents cités:
- EP-A- 0 451 093
- WO-A-79/00132
- FR-A- 1 081 059
- FR-A- 2 260 376
- LU-A- 51 283
- US-A- 3 752 611

## Description

L'invention concerne un procédé d'atomisation d'un matériau liquide dispersable ou d'un mélange de matériaux liquides dispersables.

Actuellement, la majorité des poudres métalliques est fabriquée par divers procédés d'atomisation. Le principe à la base de ces procédés est souvent le même : un métal liquide, disposé dans un répartiteur, est forcé à travers une buse pour obtenir un jet mince qui est dispersé sous forme de particules par le mouvement rapide d'un gaz ou d'un courant de liquide.

On peut distinguer trois familles de procédés d'atomisation. Selon une première famille, le métal liquide, dans la majorité des cas, est atomisé au moment de la coulée. Dans un cas particulier de procédé, la désintégration du liquide en particules est effectuée par l'action mécanique d'un disque tournant, mais en général, l'atomisation est effectuée par air, gaz, eau, et sous vide par éclatement du liquide dû à une forte différence de pression. La projection de particules solides a également été mentionnée mais s'est jusqu'à présent limitée à l'agglomération du ou l'introduction avec le matériau liquide dispersable.

Une autre famille de procédé a été développée un peu plus récemment. Il s'agit d'atomisation par force centrifuge mise en oeuvre selon deux variantes : soit l'électrode en fusion constitue la matière première pour l'obtention des particules, soit le répartiteur contenant le liquide est soumis à une rotation qui provoque l'éjection du liquide sous forme de gouttes contre les parois refroidies d'une installation, permettant ainsi de récupérer une poudre.

Enfin, une dernière famille est constituée par des procédés utilisant les ultra-sons, une électrode vibrante et des cylindres en rotation, refroidis.

Néanmoins, si les procédés d'atomisation connus de l'état de la technique présentent des avantages non négligeables comme notamment l'obtention de particules très denses et homogènes avec une bonne pureté et un contrôle de la composition efficace, ils nécessitent le contrôle, le plus souvent, de plusieurs paramètres à la fois qui rend la mise en oeuvre des procédés difficile.

Ainsi, le processus d'atomisation est déterminé par la géométrie du système, à savoir : le diamètre de l'orifice (et donc le diamètre du jet de liquide), la géométrie de la tuyère d'injection de l'agent d'atomisation (la vitesse du courant), l'angle formé entre le jet et le courant, la distance de parcours des particules et la distance entre le jet et le courant. Toutes ces contraintes nécessitent des connaissances en métallurgie suffisantes pour maîtriser et bien contrôler le bain de métal liquide.

Par ailleurs, l'atomisation de métaux pose le problème de transformations qui peuvent se produire durant le refroidissement rapide d'une goutte fondue. Ainsi, dans le cas de certains alliages - par exemple Cu/Pb - une phase plus fusible peut se trouver par ségrégation dans le coeur de la goutte. Une différence de composition peut également apparaître entre des particules de diverses grosseurs.

D'autre part, il est parfois difficile d'atomiser un métal très réactif à l'eau (zirconium par exemple) pour obtenir une division dans la gamme de 1 à 25 mm en conservant une forme massive des particules.

Egalement, des matériaux fondus légers comme le silicium, l'aluminium et leurs alliages ont beaucoup de mal à pénétrer le jet d'eau et l'atomisation à l'eau s'avère inefficace. Dans ces deux cas, il est nécessaire de faire appel à des techniques d'atomisation au gaz, sophistiquées et onéreuse.

Dans le cas d'une atomisation par air ou gaz, le refroidissement rapide peut aussi provoquer l'occlusion du gaz dans la particule. Pour certains alliages, on observe même des structure de trempe, d'où la nécessité de recuire les poudres avant leur mise en forme.

Enfin, de manière générale, le spectre granulométrique est assez large, l'obtention d'une granulométrie plus uniforme nécessitant des contrôles très sévères du processus mis en jeu.

Le document WO-A-7900132 décrit un appareil d'atomisation d'un métal liquide effectué par un jet de gaz inerte, une matière additionnelle telle que du gaz, des particules de poudre ou un mélange de gaz et de particules de poudre étant injectée dans la chambre d'atomisation avant ou après atomisation du métal liquide.

Le document EP-A451 093 concerne un procédé de préparation et de précipitation d'un métal à haut point de fusion consistant à atomiser un métal élémentaire ou un alliage métallique liquide en utilisant un jet de gaz dans lequel est ajoutée une poudre à haut point de fusion.

Un objet de la présente invention est donc de proposer un procédé d'atomisation d'un matériau liquide dispersable qui pallie les inconvénients ou limites des procédés connus de l'état de la technique.

Plus particulièrement, un objet de la présente invention est de proposer un procédé d'atomisation d'un matériau liquide dispersable qui permette de contrôler la granulométrie de particules obtenues, ainsi que de restreindre le spectre granulométrique de manière à obtenir une granulométrie plus uniforme et ce, quel que soit le matériau liquide dispersable utilisé.

Un autre objet de la présente invention est de proposer un tel procédé qui permette d'obtenir des particules fines, notamment 0,02 à 0,6 mm de diamètre, avec un bon rendement énergétique et une forte productivité.

Un autre objet de la présente invention est de proposer un tel procédé dans lequel il n'y a pas de refroidissement immédiat du matériau liquide atomisé de manière à permettre à ces particules de subir d'éventuelles atomisations complémentaires.

Un autre objet de la présente invention est de proposer un tel procédé qui permette d'atomiser à faible coût un matériau liquide dispersable léger dans la gamme de granulométrie de 0,5 à 25 mm.

Un autre objet de la présente invention est de proposer un tel procédé qui soit, en combinaison, simple de mise en oeuvre, fiable, non polluant, et économe en énergie.

A cet effet, l'invention concerne un procédé d'atomisation d'un matériau liquide dispersable ou d'un mélange de matériaux liquides dispersables, par projection d'au moins un courant de particules solides, les particules solides étant partiellement ou totalement revêtues d'une couche d'un matériau, sous forme d'un film ou de gouttes à la surface des particules solides, la nature de ce matériau de revêtement étant telle que la dispersion in situ du liquide dispersable soit augmentée par expansion rapide du matériau de revêtement lorsque les particules solides revêtues sont à proximité ou au contact du matériau dispersable.

Selon une autre caractéristique, le film ou les gouttes à la surface des particules solides sont réactifs à proximité ou au contact du matériau liquide dispersable du fait de leur évaporation, leur sublimation.

Le procédé conforme à la présente invention comprend également les caractéristiques suivantes, prises seules, en combinaison ou optionnellement : on projette le courant de particules solides sur la surface d'un bain du matériau liquide dispersable, sur l'écoulement par déversement d'un bain dudit matériau, sur un jet dudit matériau obtenu par écoulement à travers un orifice ou équivalent, sous immersion dans un bain dudit matériau ; le procédé conforme à la présente invention comprend une étape supplémentaire consistant en une étape d'atomisation par eau, gaz, sous vide, sur un cône, une plaque ou un tambour, par centrifugation, explosion ou équivalent, cette étape supplémentaire s'effectuant préalablement ou après le procédé conforme à la présente invention.

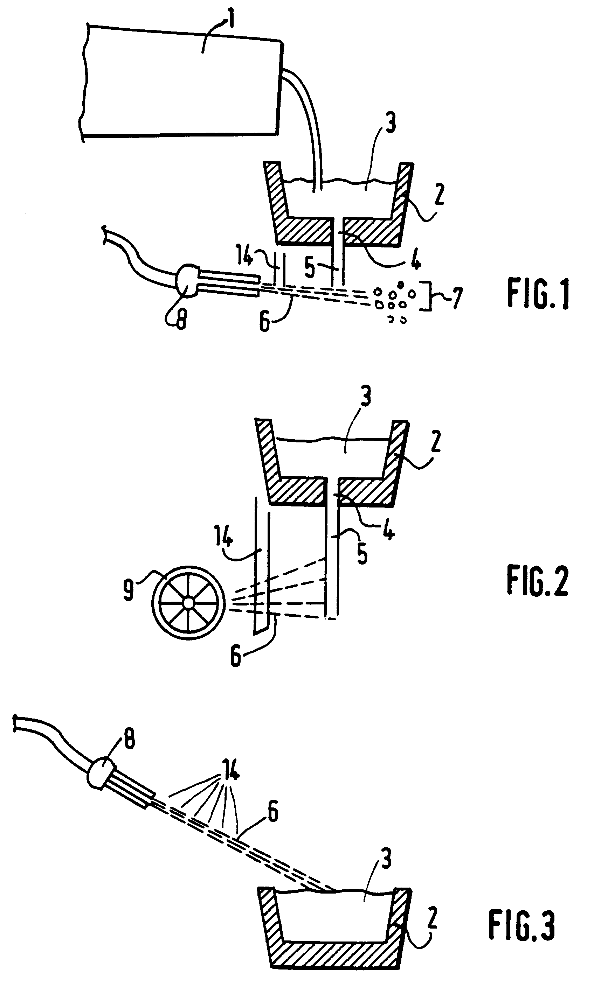

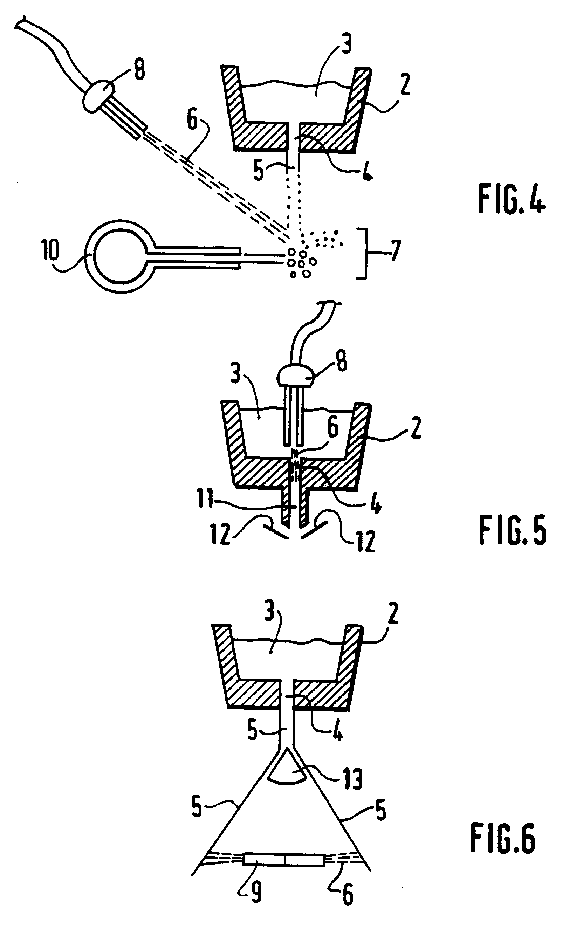

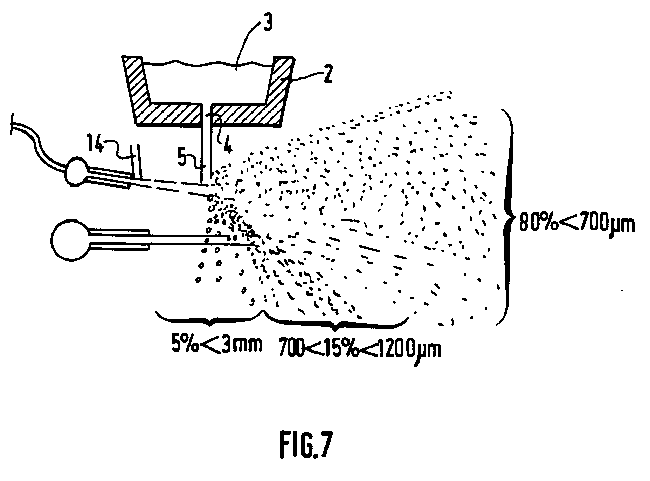

D'autres caractéristiques et avantages de la présente invention apparaîtront à la lecture de la description qui suit en référence aux dessins annexés dans lesquels :
. La figure 1 est une vue schématique, en coupe, d'une première variante d'une installation pour la mise en oeuvre du procédé conforme à la présente invention.
. La figure 2 est une vue schématique, en coupe, d'une deuxième variante d'une installation pour la mise en oeuvre du procédé conforme à la présente invention.
. La figure 3 est une vue schématique, en coupe, d'une troisième variante d'une installation pour la mise en oeuvre du procédé conforme à la présente invention.
. La figure 4 est une vue schématique, en coupe, d'une quatrième variante d'une installation pour la mise en oeuvre du procédé conforme à la présente invention.
. La figure 5 est une vue schématique, en coupe, d'une cinquième variante d'une installation pour la mise en oeuvre du procédé conforme à la présente invention.
. La figure 6 est une vue schématique, en coupe, d'une sixième variante d'une installation pour la mise en oeuvre du procédé conforme à la présente invention.
. La figure 7 est une vue schématique illustrant l'exemple 2 décrit par la suite.

L'invention concerne donc un procédé d'atomisation d'un matériau liquide dispersable. Dans la présente description, on entend par matériau liquide dispersable, tout matériau qui est liquide à température ambiante ou à une température supérieure à la température ambiante. Un tel matériau comprend notamment, l'eau, un métal, un alliage, une matière synthétique (par exemple thermoplastique), à usage alimentaire, pharmaceutique, cosmétique, agricole, etc. Dans le cas où le matériau liquide dispersable est un métal, celui-ci peut être choisi dans le groupe constitué par le zirconium, l'aluminium, le silicium ou l'un de leurs alliages. Ce matériau peut se présenter sous la forme également d'un mélange. Dans la description qui précède ou qui suit, le terme matériau liquide dispersable doit être compris comme un seul matériau ou un mélange de matériaux.

Par commodité, dans la suite de la description, il sera fait référence à l'acier comme matériau liquide dispersable, mais il doit être entendu que le procédé conforme à la présente invention ne se limite pas à un tel matériau.

Sur les figures 1 à 6, sont représentées des variantes d'installation pour la mise en oeuvre du procédé conforme à l'invention. De telles installations, classiques dans le domaine de l'atomisation, comportent un chenal 1 destiné au transport du matériau liquide dispersable 3 et surplombant un répartiteur ou tundish 2.

Selon l'invention, le procédé d'atomisation se caractérise en ce qu'on disperse le matériau liquide dispersable 3 sous forme de particules 7, par projection d'au moins un courant de particules solides réactives sur ledit matériau et on recueille lesdites particules 7 dans un milieu de réception.

On entend ici par particules solides réactives 6, des particules solides revêtues, totalement ou partiellement, préalablement à ou au cours de leur projection sur le matériau liquide dispersable 3, d'une couche plus ou moins épaisse ou de gouttes ou gouttelettes plus ou moins fines dont la nature va augmenter la dispersion in-situ du matériau liquide, par expansion rapide du fait de leur vaporisation ou sublimation ou par une réaction chimique violente ou explosive ou par action électrique et/ou magnétique. L'avantage du procédé de l'invention est ici évident : en réalisant un maillage serré du fait du passage du flux de particules solides réactives on peut contrôler parfaitement la granulométrie du matériau dispersé en maîtrisant la réactivité au sein du matériau dispersable. Le film ou les gouttes à la surface des particules solides sont réactifs à proximité ou au contact du matériau liquide dispersable, du fait de leur évaporation, leur sublimation, d'une réaction chimique violente ou explosive ou d'une interraction électrique et/ou magnétique.

Dans la description qui suit, on fera référence au terme particule solide, mais il doit être entendu que ce terme englobe toutes les particules solides réactives.

L'un des avantages du procédé de l'invention est sa très grande souplesse d'utilisation. En effet, ce dernier peut s'adapter à tout type d'installation d'atomisation déjà existante. En fonction de celle-ci et du cahier des charges à remplir par l'opérateur, l'une ou l'autre des variantes représentées aux figures 1 à 6 sera utilisée.

Dans la plupart des installations d'atomisation existantes, le matériau liquide dispersable 3 est forcé à travers un orifice 4 de manière à obtenir un jet 5 mince d'un diamètre ou d'une épaisseur inférieurs à environ 20 mm par exemple pour l'acier.

Selon l'invention, on projette le courant de particules solides 6 sur le jet 5 du matériau liquide dispersable 3 obtenu par écoulement dudit matériau à travers l'orifice 4 (figures 1, 2, 4).

La projection du courant de particules solides 6 peut également s'effectuer sur la dispersion conique du jet 5 d'un matériau liquide, obtenu en interposant un cône 13 sur le chemin du jet. Bien évidemment, le cône 13 peut être substitué par tout moyen équivalent comme une plaque, ou un tambour.

Mais la projection du courant de particules solides 6 peut également s'effectuer sur l'écoulement par déversement d'un bain du matériau liquide dispersable ; sur la surface du bain du matériau liquide dispersable et sous immersion dans le bain du matériau liquide dispersable 3 tel que représenté, respectivement par les figures 3 et 5.

Le procédé conforme à la présente invention peut comporter également une étape supplémentaire consistant en une étape classique d'atomisation par eau, gaz, sous vide, sur un cône, une plaque ou un tambour, par centrifugation, explosion ou équivalent.

Cette étape supplémentaire peut avoir lieu soit préalablement, soit après la projection du courant de particules solides 6.

Ainsi, sur la figure 4, le jet 5 de matériau liquide dispersable 3 subit une première atomisation au moyen d'un courant de particules solides 6. Cette première atomisation a pour résultat un mélange de particules 7 du matériau liquide, notamment des particules fines et des particules plus grossières. Ces particules grossières sont alors soumises à une seconde atomisation au moyen d'un compresseur à eau 10 qui propulse l'eau à une pression de 0,8 à 1,2 bars environ, une pression supérieure à 1,2 bars déformant les particules.

Sur la figure 5, la première atomisation par projection d'un courant de particules solides 6 s'effectue par immersion dans le bain de matériau liquide dispersable 3. Les particules atomisées traversent l'orifice 4 puis une buse 11 et sont soumises à une seconde atomisation par un courant de gaz (air ou gaz neutre) provenant d'une tuyère annulaire 12.

Sur la figure 6 est représentée une autre variante du procédé conforme à la présente invention dans laquelle l'atomisation par projection d'un courant de particules solides 6 a lieu après une première atomisation effectuée au moyen d'un cône 13.

De tout ce qui précède, on comprend que le procédé conforme à la présente invention présente une très grande souplesse d'utilisation puisqu'en fonction des résultats désirés et des contraintes liées à l'environnement de l'installation d'atomisation, on peut projeter le courant de particules solides 6 avec une incidence rasante à perpendiculaire par rapport à la surface libre du matériau liquide dispersable 3. On peut également projeter successivement ou simultanément plusieurs courants de particules solides 6, de même nature ou de nature différente. Selon le moyen de projection utilisé, on peut également projeter le courant de particules solides 6 de manière ponctuelle ou sur une grande longueur ou surface du matériau liquide 3.

S'agissant des moyens de projection du courant de particules solides 6, ils comprennent les moyens de projection par gravité ; une turbine 9 ou tout autre moyen mécanique approprié, la vitesse des particules solides 6 en sortie de la turbine 9 étant comprise, de manière préférée entre 20 et 120 m/s ; par propulsion par ou dans un fluide au moyen d'une lance 8 reliée à un compresseur délivrant une pression comprise entre notamment 0,5 et 15 bars, le fluide de propulsion pouvant participer également à la dispersion du matériau liquide dispersable 3. Comme fluide envisageable, on peut citer par exemple l'eau, ou un gaz.

Les moyens de projection du courant de particules solides 6 comprennent également ceux par entraînement électrique, magnétique ou électromagnétique.

S'agissant des paramètres de projection, de manière préférée, le volume cumulé des particules solides 6 projetées vaut sensiblement un centième à deux fois le volume du matériau liquide 3 à disperser. La vitesse, la granulométrie et l'énergie de projection quant à elles, sont réglées en fonction de la dispersion désirée, et donc de la granulométrie que l'on cherche à obtenir. De même, outre la réactivité des particules solides, ces paramètres feront que les particules solides adhèrent ou n'adhèrent pas au liquide dispersé.

Bien évidemment, la vitesse et l'énergie de projection sont fonctions également de la nature des particules solides 6. Ces dernières peuvent avoir une nature identique ou non à celle du matériau liquide dispersable 3. Ce peut être, par exemple, des produits pulvérulents, comme notamment à titre non limitatif des billes ou poudre de céramique, de métal, de glace, de carbo-glace, de matière synthétique, du sable, du gravier, des produits pulvérulents chimiques à usage alimentaire, pharmaceutique, cosmétique, agricole, etc.

Dans une application possible de l'invention, on utilise de la grenaille pour disperser le jet 5 de matériau liquide 3. Cette grenaille peut provenir d'une coulée précédente ou de la coulée en cours qui comporte un circuit de recyclage. Elle est mouillée à l'eau avant ou au cours de leur atomisation par exemple en la faisant traverser un rideau d'eau 14.

Le courant de particules solides 6 peut se présenter également sous la forme d'un mélange.

Selon l'invention, la dispersion est améliorée par un phénomène de liquéfaction, vaporisation ou sublimation du revêtement des particules solides 6 ou par une réaction chimique violente et/ou explosive desdits revêtements 6 avec le matériau liquide dispersable 3.

Les particules 7 de matériau liquide atomisé obtenues par la mise en oeuvre du procédé conforme à l'invention comprennent des poudres, des goutelettes, des gouttes, du fil, des particules solides enrobées du matériau liquide pris en masse sur lesdites particules, toutes ces particules ayant, dans tous les cas, un diamètre inférieur à 100 mm. Quant à leur composition, ce peut être soit celle du matériau liquide dispersable ou du mélange de liquide dispersable, soit une composition chimique issue de la réaction ente les particules solides 6, de même nature ou non, et/ou du matériau liquide dispersable et/ou du milieu de réception.

L'invention sera maintenant décrite à l'aide de deux exemples donnés à titre non limitatif dans le cas où un acier liquide est mis en oeuvre dans un procédé conforme à la présente invention.

### Exemple 1 :

- Matériau liquide dispersable : Acier
   . diamètre du jet de coulée : 15 mm
   . surface du jet de coulée : 176 mm²
   . vitesse à l'impact : 4 m/s
   . débit : 3.10⁵ mm³/s
- Particules solides : grenailles rondes WS 110 (fabriquées et commercialisées par la société WHEELABRATOR ALLEVARD)
   . diamètre : 0,2 à 0,6 mm
   . vitesse : 60 m/s
   . débit : 200 g/s
   . Projection par lance, P = 6 bars, lance droite

Les paramètres d'atomisation ainsi définis ont conduit à l'obtention de :
. 42 % de particules avec une granulométrie de 0 à 700 µm
. 45 % de particules avec une granulométrie de 1,5 à 6 mm susceptibles d'être à nouveau atomisés

### Exemple 2 (illustré par la figure 7) :

- Matériau liquide dispersable identique à celui de l'exemple 1 ci-dessus.
- Particules solides également identiques mais pression par lance à P = 4 bars et vitesse des particules de 40 m/s.
- Interposition d'un rideau d'eau d'épaisseur 20mm entre l'extrémité de la buse et le jet d'acier liquide.

Reprise des particules les moins déviées par une seconde atomisation à l'eau seule (pression env. 1 bar).

Selon ce procédé, on obtient :
. 80 % de particules avec une granulométrie de 0 à 700 µm.
. 15 % de particules avec une granulométrie de 700 à 1 200 µm.
. 5 % de particules avec une granulométrie entre 1 200 et 3 000 µm qui bien que peu déviées ont échappé, sur les côtés, à la reprise par le jet d'eau.

### Exemple 3 :

. Matériau liquide dispersable : zirconium
   Problème : diviser le matériau pour réaliser des additions précises dans la constitution d'alliages (le broyage est très difficile)
   - diamètre du jet de coulée: 15 mm
   - surface du jet de coulée: 176 mm²
   - vitesse de l'impact: 3 m/s
   - débit: 4 x 10⁵ mm³/s
. Particules solides : morceaux de zirconium (fabriqués par broyage et commerciaisés par la zociété CEZUS) recouverts d'eau
   - diamètre: 0,5 à 25 mm
   - vitesse: 30 m/s
   - débit: 100 g/s
   projection par tubine : φ 250 mm, vitesse de sortie 30 m/s
. L'atomisation a conduit à l'obtention de billes et de particules de 0,5 à 25 mm utilisables pour des additions très précises.

### Exemple 4 :

. Matériau liquide dispersable : silicium métal
   - diamètre du jet de coulée: 25 mm
   - surface du jet de coulée: 625 mm²
   - vitesse de l'impact: 3 m/s
   - débit: 1,5 x 10⁶ mm³/s
. Particules solides : grenailles rondes d'acier de 4 à 20 mm trempées dans l'azote liquide
   - vitesse: 40 m/s
   - débit: 350 g/s
   projection par turbine : φ 250 mm
   Selon ce procédé, on obtient des particules de silicium métal (la grenaille d'acier est séparée magnétiquement) avec une granulométrie de 0,1 à 12 mm à structure de refroidissement rapide, intéressant le monde de l'électronique.

## Revendications

1. Procédé d'atomisation d'un matériau liquide dispersable ou d'un mélange de matériaux liquides dispersables (3), par projection d'au moins un courant de particules solides (6), caractérisé par le fait que les particules solides (6) sont partiellement ou totalement revêtues d'une couche d'un matériau, sous forme d'un film ou de gouttes à la surface des particules solides (6), la nature de ce matériau de revêtement étant telle que la dispersion in situ du liquide dispersable (3) soit augmentée par expansion rapide du matériau de revêtement lorsque les particules solides revêtues (6) sont à proximité ou au contact du matériau dispersable (3).

2. Procédé selon la revendication 1, caractérisé en ce que l'expansion rapide du matériau de revêtement correspond à sa sublimation, son évaporation.

3. Procédé selon la revendication 1, caractérisé en ce qu'on projette le courant de particules solides revêtues (6) sur la surface d'un bain du matériau liquide dispersable (3).

4. Procédé selon la revendication 1, caractérisé en ce qu'on projette le courant de particules solides revêtues (6) sur l'écoulement par déversement d'un bain du matériau liquide dispersable (3).

5. Procédé selon la revendication 1, caractérisé en ce qu'on projette le courant de particules solides revêtues (6) sur un jet du matériau liquide dispersable (3) obtenu par écoulement dudit matériau à travers un orifice (4) ou équivalent.

6. Procédé selon la revendication 1, caractérisé en ce qu'on projette le courant de particules solides revêtues (6) sous immersion dans un bain du matériau liquide dispersable (3).

7. Procédé selon l'une quelconque des revendications 1 à 6, caractérisé en ce qu'il comprend une étape supplémentaire consistant en une étape d'atomisation par eau, gaz, sous vide, sur un cône, une plaque ou un tambour, par centrifugation, explosion ou équivalent du matériau liquide (3) atomisé par projection du courant de particules solides revêtues (6).

8. Procédé selon l'une quelconque des revendications 1 à 6, caractérisé en ce qu'on disperse le matériau liquide dispersable (3) au moyen d'une atomisation par eau, gaz, sous vide, sur un cône une plaque ou un tambour, par centrifugation, explosion ou équivalent, puis on projette au moins un courant de particules solides revêtues (6) sur le matériau dispersé.

9. Procédé selon l'une quelconque des revendications 1 à 8, caractérisé en ce que les particules solides revêtues (6) et le matériau liquide dispersable (3) ont une nature identique ou non.

10. Procédé selon l'une quelconque des revendications 1 à 9, caractérisé en ce que le courant de particules solides revêtues (6) a une incidence rasante à perpendiculaire par rapport à la surface libre du matériau liquide dispersable (3).

11. Procédé selon l'une quelconque des revendications 1 à 10, caractérisé en ce qu'on projette successivement ou simultanément plusieurs courants, de particules solides revêtues (6), de même nature ou de nature différente.

12. Procédé selon l'une quelconque des revendications 1 à 11, caractérisé en ce qu'on projette le courant de particules solides revêtues (6) de manière ponctuelle ou sur une grande longueur ou surface du matériau liquide (3).

13. Procédé selon l'une quelconque des revendications 1 à 12, caractérisé en ce qu'on projette le courant de particules solides (6) revêtues avec une vitesse et une énergie adaptées à la dispersion désirée.

14. Procédé selon l'une quelconque des revendications 1 à 13, caractérisé en ce que le volume cumulé des particules solides revêtues (6) projetées vaut sensiblement un centième à deux fois le volume du matériau liquide (3) à disperser.

15. Procédé selon l'une quelconque des revendications 1 à 14, caractérisé en ce qu'on projette le courant de particules solides revêtues (6) par gravité.

16. Procédé selon l'une quelconque des revendications 1 à 15, caractérisé en ce qu'on projette le courant de particules solides revêtues (6) par turbine (9) ou tout autre moyen mécanique approprié.

17. Procédé selon la revendication 16, caractérisé en ce que la vitesse des particules solides revêtues (6) en sortie de la turbine est comprise entre 120 et 20 m/s.

18. Procédé selon l'une quelconque des revendications 1 à 14, caractérisé en ce qu'on projette le courant de particules solides revêtues (6) par propulsion par ou dans un fluide.

19. Procédé selon la revendication 18, caractérisé en ce que le fluide de propulsion participe à la dispersion du matériau liquide dispersable (3).

20. Procédé selon la revendication 18 ou 19, caractérisé en ce que la pression du fluide de propulsion est comprise entre 0,5 et 15 bars.

21. Procédé selon l'une quelconque des revendications 1 à 14, caractérisé en ce qu'on projette les particules solides revêtues (6) par entraînement électrique, magnétique ou électromagnétique.

22. Procédé selon l'une quelconque des revendications 1 à 21, caractérisé en ce que les particules solides revêtues (6) sont choisies parmi les produits pulvérulents.

23. Procédé selon la revendication 22, caractérisé en ce que les produits pulvérulents comprennent notamment un élément choisi dans le groupe constitué par des billes ou poudre de céramique, de métal, de glace, de carboglace, de matière synthétique, du sable, du gravier, des produits chimiques.

24. Procédé selon la revendication 23, caractérisé en ce que les particules solides revêtues (6) sont de la grenaille revêtue d'eau.

25. Procédé selon l'une quelconque des revendications 1 à 24, caractérisé en ce que la dispersion est améliorée par une interaction électrique et/ou magnétique ou par une réaction chimique violente et/ou explosive desdits revêtements (6) avec le matériau liquide dispersable (3).

26. Procédé selon l'une quelconque des revendications 1 à 25, caractérisé en ce que le matériau liquide dispersable (3) est un métal ou un alliage.

27. Procédé selon la revendications 26, caractérisé en ce que le matériau liquide dispersable (3) est de l'acier.

28. Procédé selon la revendication 26, caractérisé en ce que le matériau liquide dispersable (3) est un matériau choisi dans le groupe constitué par le zirconium, l'aluminium, le silicium ou l'un de leurs alliages.

## Claims

1. Process for atomizing a dispersible liquid material or a mixture of dispersible liquid materials (3), by spraying at least one stream of solid particles (6), characterized in that the solid particles (6) are coated, completely or partially, with a layer or drops, the coating material forming such drops or layer on the surface of said solid particles (6) having a nature that increase the in-situ dispersion of the dispersible liquid material (3) due to rapid expansion of the coating material when coated solid particles (6) are near or in contact with the dispersible liquid material (3).

2. Process according to claim 1, characterized in that the rapid expansion of the coating material corresponds to its sublimation or evaporation.

3. Process according to Claim 1, characterized in that the stream of reactive solid particles (6) is sprayed onto the surface of a bath of the dispersible liquid material (3).

4. Process according to Claim 1, characterized in that the stream of reactive solid particles (6) is sprayed onto the outflow by overspill of a bath of dispersible liquid material (3).

5. Process according to Claim 1, characterized in that the stream of reactive solid particles (6) is sprayed onto a jet of the dispersible liquid material (3) obtained by outflow of the said material through an orifice (4) or equivalent.

6. Process according to Claim 1, characterized in that the stream of reactive solid particles (6) is sprayed under immersion in a bath of the dispersible liquid material (3).

7. Process according to any one of Claims 1 to 6, characterized in that it includes an additional step consisting of a step of atomization using water, gas, under vacuum, on a cone, a sheet or a drum, by centrifuging, explosion or equivalent of the liquid material (3) atomized by spraying the stream of reactive solid particles (6).

8. Process according to any one of Claims 1 to 6, characterized in that the dispersible liquid material (3) is dispersed by means of an atomization using water, gas, under vacuum, on a cone, a sheet or a drum, by centrifuging, explosion or equivalent, and then at least one stream of reactive solid particles (6) is sprayed onto the dispersed material.

9. Process according to any one of Claims 1 to 8, characterized in that the reactive solid particles (6) and the dispersible liquid material (3) are identical or nonidentical in nature.

10. Process according to any one of Claims 1 to 9, characterized in that the stream of reactive solid particles (6) has a glancing to perpendicular incidence in relation to the free surface of the dispersible liquid material (3).

11. Process according to any one of Claims 1 to 10, characterized in that a number of streams of reactive solid particles (6), of the same nature or of different nature, are sprayed successively or simultaneously.

12. Process according to any one of Claims 1 to 11, characterized in that the stream of reactive solid particles (6) is sprayed at points or onto a great length or area of the liquid material (3).

13. Process according to any one of Claims 1 to 12, characterized in that the stream of reactive solid particles (6) is sprayed with a velocity and an energy which are adapted to the desired dispersion.

14. Process according to any one of Claims 1 to 13, characterized in that the cumulative volume of the sprayed reactive solid particles (6) amounts substantially to one hundredth of to twice the volume of the liquid material (3) to be dispersed.

15. Process according to any one of Claims 1 to 14, characterized in that the stream of reactive solid particles (6) is sprayed using gravity.

16. Process according to any one of Claims 1 to 15, characterized in that the stream of reactive solid particles (6) is sprayed by turbine (9) or any other suitable mechanical means.

17. Process according to Claim 16, characterized in that the velocity of the reactive solid particles (6) leaving the turbine is between 120 and 20 m/s.

18. Process according to any one of Claims 1 to 14, characterized in that the stream of reactive solid particles (6) is sprayed by propulsion by or in a fluid.

19. Process according to Claim 18, characterized in that the propulsion fluid takes part in the dispersion of the dispersible liquid material (3).

20. Process according to Claim 18 or 19, characterized in that the pressure of the propulsion fluid is between 0.5 and 15 bars.

21. Process according to any one of Claims 1 to 14, characterized in that the reactive solid particles (6) are sprayed by electrical, magnetic or electromagnetic entrainment.

22. Process according to any one of Claims 1 to 21, characterized in that the reactive solid particles (6) are chosen from pulverulent products.

23. Process according to Claim 22, characterized in that the pulverulent products include especially a component chosen from the group consisting of beads of or powdered ceramic, metal, ice, solid carbon dioxide, synthetic material, sand, gravel and chemical products.

24. Process according to Claim 23, characterized in that the reactive solid particles (6) are shot coated with water.

25. Process according to any one of Claims 1 to 24, characterized in that the dispersion is improved by an electrical and/or magnetic interaction or by a violent and/or explosive chemical reaction of the said coatings with the dispersible liquid material (3).

26. Process according to any one of Claims 1 to 25, characterized in that the dispersible liquid material (3) is a metal or an alloy.

27. Process according to Claim 26, characterized in that the dispersible liquid material (3) is steel.

28. Process according to Claim 26, characterized in that the dispersible liquid material (3) is a material chosen from the group consisting of zirconium, aluminium, silicon or one of their alloys.

## Patentansprüche

1. Zerstäubungsverfahren eines dispergierbaren flüssigen Stoffes oder einer Mischung von dispergierbaren flüssigen Stoffen (3) durch Projektion zumindest eines Stroms von Festpartikeln (6), dadurch gekennzeichnet, daß die Festpartikel (6) teilweise oder völlig von einer Stoffschicht in Form eines Films oder von Tropfen an der Oberfläche der Festpartikel (6) beschichtet sind, wobei dieser Beschichtungsstoff so beschaffen ist, daß die in-situ Zerstäubung der dispergierbaren Flüssigkeit (3) durch die schnelle Expansion des Beschichtungsstoffes erhöht wird, wenn sich die beschichteten Festpartikel (6) in der Nähe oder in Kontakt mit dem dispergierbaren Stoff (3) befinden.

2. Verfahren nach Anspruch 1, dadurch gekennzeichnet, daß die schnelle Expansion des Beschichtungsstoffes seiner Sublimation, seiner Verdampfung entspricht.

3. Verfahren nach Anspruch 1, dadurch gekennzeichnet, daß der Strom der beschichteten Festpartikel (6) auf die Oberfläche eines Bads des dispergierbaren flüssigen Stoffes (3) projiziert wird.

4. Verfahren nach Anspruch 1, dadurch gekennzeichnet, daß der Strom der beschichteten Festpartikel (6) durch Ausgiessen eines Bads des dispergierbaren flüssigen Stoffes (3) auf den Abfluß projiziert wird.

5. Verfahren nach Anspruch 1, dadurch gekennzeichnet, daß der Strom der beschichteten Festpartikel (6) auf einen Strahl des dispergierbaren flüssigen Stoffes (3) projiziert wird, der durch den Abfluß des besagten Stoffes durch eine Öffnung (4) oder ähnlich erzeugt wird.

6. Verfahren nach Anspruch 1, dadurch gekennzeichnet, daß der Strom der beschichteten Festpartikel (6) durch Eintauchen in ein Bad des dispergierbaren flüssigen Stoffes (3) projiziert wird.

7. Verfahren nach einem der Ansprüche 1 bis 6, dadurch gekennzeichnet, daß es eine zusätzliche Etappe umfaßt, die aus einer Zerstäubungsetappe durch Wasser, Gas, unter Vakuum, auf einen Kegel, eine Platte oder eine Trommel durch Zentrifugieren, Explosion oder ähnlich des durch Projektion des Stroms der beschichteten Festpartikel (6) zerstäubten flüssigen Stoffes (3) besteht.

8. Verfahren nach einem der Ansprüche 1 bis 6, dadurch gekennzeichnet, daß der dispergierbare flüssige Stoff (3) anhand einer Zerstäubung durch Wasser, Gas, unter Vakuum, auf einen Kegel, eine Platte oder eine Trommel durch Zentrifugieren, Explosion oder ähnlich zerstäubt wird, wonach man mindestens einen Strom von beschichteten Festpartikeln (6) auf den dispergierten Stoff projiziert.

9. Verfahren nach einem der Ansprüche 1 bis 8, dadurch gekennzeichnet, daß die beschichteten Festpartikel (6) und der dispergierbare flüssige Stoff (3) identischer Art sind oder nicht.

10. Verfahren nach einem der Ansprüche 1 bis 9, dadurch gekennzeichnet, daß der Strom der beschichteten Festpartikel (6) einen streifenden bis lotrechten Einfallwinkel in Bezug auf die freie Oberfläche des dispergierbaren flüssigen Stoffes (3) aufweist.

11. Verfahren nach einem der Ansprüche 1 bis 10, dadurch gekennzeichnet, daß aufeinanderfolgend oder gleichzeitig mehrere Ströme von beschichteten Festpartikeln (6) gleicher oder unterschiedlicher Art projiziert werden.

12. Verfahren nach einem der Ansprüche 1 bis 11, dadurch gekennzeichnet, daß der Strom der beschichteten Festpartikel (6) Pünktlich oder auf eine große Länge oder Oberfläche des flüssigen Stoffes (3) projiziert wird.

13. Verfahren nach einem der Ansprüche 1 bis 12, dadurch gekennzeichnet, daß der Strom der beschichteten Festpartikel (6) mit einer Geschwindigkeit und einer Energie projiziert wird, die der gewünschten Zerstäubung entsprechen.

14. Verfahren nach einem der Ansprüche 1 bis 13, dadurch gekennzeichnet, daß das kumulierte Volumen der projizierten beschichteten Festpartikel (6) etwa einem Hundertstel bis zwei Mal dem Volumen des zu dispergierenden flüssigen Stoffes (3) entspricht.

15. Verfahren nach einem der Ansprüche 1 bis 14, dadurch gekennzeichnet, daß der Strom der beschichteten Festpartikel (6) durch Schwerkraft projiziert wird.

16. Verfahren nach einem der Ansprüche 1 bis 15, dadurch gekennzeichnet, daß der Strom der beschichteten Festpartikel (6) mit einer Turbine (9) oder jedem anderen geeigneten mechanischen Mittel projiziert wird.

17. Verfahren nach Anspruch 16, dadurch gekennzeichnet, daß die Geschwindigkeit der beschichteten Festpartikel (6) am Turbinenausgang zwischen 120 und 20 m/s beträgt.

18. Verfahren nach einem der Ansprüche 1 bis 14, dadurch gekennzeichnet, daß der Strom der beschichteten Festpartikel (6) durch Antrieb durch oder in ein Medium projiziert wird.

19. Verfahren nach Anspruch 18, dadurch gekennzeichnet, daß das Antriebsmedium an der Zerstäubung des dispergierbaren flüssigen Stoffes (3) beteiligt ist.

20. Verfahren nach Anspruch 18 oder 19, dadurch gekennzeichnet, daß der Druck des Antriebsmediums zwischen 0,5 und 15 Bar beträgt.

21. Verfahren nach einem der Ansprüche 1 bis 14, dadurch gekennzeichnet, daß die beschichteten Festpartikel (6) durch elektrischem, magnetischem oder elektromechanischem Antrieb projiziert werden.

22. Verfahren nach einem der Ansprüche 1 bis 21, dadurch gekennzeichnet, daß die beschichteten Festpartikel (6) unter den pulverförmigen Produkten gewählt werden.

23. Verfahren nach Anspruch 22, dadurch gekennzeichnet, daß die pulverförmigen Produkte insbesondere ein Element aus der Gruppe umfassen, die Kugeln oder Pulver aus Keramik, Metall, Glas, Carboglas, Kunststoff, Sand, Kies, Chemikalien umfaßt.

24. Verfahren nach Anspruch 23, dadurch gekennzeichnet, daß es sich bei den beschichteten Festpartikeln (6) um wasserbeschichtetes Schrot handelt.

25. Verfahren nach einem der Ansprüche 1 bis 24, dadurch gekennzeichnet, daß die Zerstäubung durch eine elektrische und/oder magnetische oder durch eine heftige chemische und/oder explosive Reaktion der besagten Beschichtungen (6) mit dem dispergierbaren flüssigen Stoff (3) verbessert wird.

26. Verfahren nach einem der Ansprüche 1 bis 25, dadurch gekennzeichnet, daß der dispergierbare flüssige Stoff (3) ein Metall oder eine Legierung ist.

27. Verfahren nach Anspruch 26, dadurch gekennzeichnet, daß es sich bei dem dispergierbaren flüssigen Stoff (3) um Stahl handelt.

28. Verfahren nach Anspruch 26, dadurch gekennzeichnet, daß es sich bei dem dispergierbaren flüssigen Stoff (3) um einen Stoff aus der Gruppe handelt, die aus Zirkonium, Aluminium, Silizium oder einer ihrer Legierungen besteht.
